# DEMANDE DE BREVET EUROPEEN

(11) **EP 1 259 085 A1**
(43) Date de publication de la demande: **20.11.2002**
(21) Numéro de dépôt: 01402467.3
(22) Date de dépôt: 26.09.2001
(51) Int. Cl.: H04Q 3/545, H04Q 3/00, H04L 12/24

(54) **Method for processing management signals of a telecommunication equipment**

(30) Priorité: 16.05.2001 IT MI010997
(71) Demandeur: ALCATEL, 75008 Paris (FR)
(72) Inventeur: Mirelli, Giacomo, 20061 Carugate (Milano) (IT); Coden, Diego, 20040 Carnate (Milano) (IT); Rodella, Vincenzo, 20066 Melzo (Milano) (IT)
(74) Mandataire: Colombo, Stefano Paolo

(57) **Abstract**

The method for processing management signals (S1, S2, S3, S4, S5) of a telecommunication equipment is based on the use of a software program; the software program reads a description of such management signals of the telecommunication equipment and carries out the processing required by acting on the data associated to such management signals. The description is generated through the steps of: a) associating the management signals to physical data; b) associating each piece of data to a field of a register; c) associating register property values to each register in relation particularly to the associated management signals; d) associating field property values to each field in relation particularly to the associated management signal; e) generating a description of the associations carried out in a format that can be read by software means.

## Description

The present invention refers to a method for processing management signals of a telecommunication equipment.

Modern telecommunication equipments usually consist of a plurality of boards, labelled B-1 ... B-n in the Figure, connected together usually through a bus (not shown in the Figure); each of the boards realizes its own functions independently from the others and communicates with the others when the operation so requires; such equipments realize a distributed-type operation.

All the telecommunication equipments of a certain complexity require a management system that allows an operator to monitor the status and to control the operation; it is clearly desirable that the management system be provided with a user-friendly user interface.

It is quite common that when the operation of the equipment is of distributed type the management system is of distributed type as well; typically, for each board B of the equipment a corresponding management subsystem is provided that will be called in the following "management agent", labelled AG in the Figure.

With reference to the Figure, such a distributed-type management system usually comprises a management manager MA and a plurality of management agents, AG-1 ... AG-n; these management entities are connected together and in communication between each other through e.g. a bus communication network NW.

The manager MA consists of an independent management board or of a management computer, often a personal computer; the manager MA comprises a processor Pr-M (often a microprocessor) and, in communication with it, memory means MM-M and communication means RT-M; the manager MA runs its own management software program that essentially realizes exchange of management data with the agents AG and realizes the overall management of the equipment taking also into account the operator's input; the manager MA may also realizes a user interface and for this purpose it may comprise an output interface OI and an input interface II both connected to the processor Pr-M.

An agent AG is very frequently realized within the corresponding board B of the equipment; each agent AG comprises a processor Pr-A (often a microcontroller) and, in communication with it, memory means MM-A, communication means RT-A and a plurality of peripherals (in the Figure, by way of example, five peripherals labelled P1, P2, P3, P4, P5); each agent AG runs its own management software program that essentially realizes exchange of management data with the manager MA and realizes the management of the corresponding board B, that is, it monitors the status of the board B by reading from the peripherals (in the Figure only peripherals P2 and P5 are read) and it controls the operation of the board B by writing on the peripherals (in the Figure only peripherals P1, P2, P3 and P4 are written).

Both the manager MA and the agents AG may be redundant for a better reliability of the management system; for example, an agent may comprise a main unit and a reserve unit that takes over whenever the main unit is faulty.

An equipment transmits and receives both internally and externally many physical signals of different nature: optical and electrical, analog and digital, etc.

The management of the equipment corresponds to the management of its physical signals; anyway, usually, it is neither necessary nor possible to manage all these signals and therefore the management is limited to a subset of them, called "manageable signals".

The management of the manageable signals is physically carried out by the peripherals; each peripheral transmits and/or receives a management signal but it may manage one or more manageable signals (e.g. the same management signal may control the switching of a number of optical signals); sometimes a number of peripherals are grouped together to form a "complex peripheral" that transmits and/or receives more than one management signals.

In the Figure, peripheral P1 receives management signal S1 and accordingly controls one or more manageable signals of the equipment; peripheral P2 receives and transmits signal S2 and according controls and monitors one or more manageable signals of the equipment; peripherals P3 and P4 respectively receive signals S3 and S4 and according control one or more manageable signals of the equipment; peripheral P5 monitors one or more manageable signals of the equipment and accordingly transmits signal S5.

Reception/transmission of a signal S is often carried out by processor Pr-A by reading/writing a digital value from/to a device register of a peripheral P.

If a microcontroller is used for realizing an agent, the processor, some memory, some peripherals and some communication means are usually integrated within the microcontroller chip.

The management software program of the manager MA or of an agent AG has to process a number of management signals of the equipment in order to carry out the desired functions; the management software is executed by processor Pr-M or Pr-A and stored in memory MM-M or MM-A.

It is normal programming practice to associate each management signal to be processed by the program to a programming variable, to assign a suitable name to each programming variable (usually that recalls the associated manageable signal or signals), to write the program code in a high-level programming language referencing the variables by their name, and to compile the program code.

This means that even if a small change to the configuration of an equipment (therefore also to some manageable signals and to the corresponding management signals) is made the program needs to be amended, recompiled and reloaded into the memory of the management entity MA or AG; if the equipment is already installed and operating this necessarily requires the intervention of the manufacturer of the equipment.

Additionally, this means that if a change is necessary to the processing algorithm of a management software of an equipment, the program of each equipment already installed and operating needs to be amended, recompiled separately (due to the different configurations of the equipments) and reinstalled.

Therefore it is the object of the present invention to provide a method for enabling a software program to process management signals of a telecommunication equipment that overcomes the above-mentioned problems.

This object is achieved through the method for enabling processing having the features set out in independent claim 1.

This method comprises the steps of:
a) associating the management signals to physical data,
b) associating each piece of data to a field of a register,
c) associating register property values to each register in relation particularly to the associated management signals,
d) associating field property values to each field in relation particularly to the associated management signal,
e) generating a description of the associations carried out in a format that can be read by software means.

According to another aspect, the present invention relates also to a method for processing management signals having the features set out in claim in independent claim 8.

This method is based on the use of a software program; the software program reads entirely or partially the description of management signals of the telecommunication equipment generated according to the above method; the software program carries out the processing required by acting on the physical data associated taking properties into account.

By using these two methods, both hardware and software maintenance of telecommunication equipments is much simplified.

Additionally, also the development of management software is simplified as these methods lead to an increased modularity of the software products.

Finally, software products based on these methods can be reused on different equipments.

According to still another aspect, the present invention relates also to a software program product comprising program code adapted to carry out the above processing method when said program code is executed by a processor, as set out in independent claim 11.

Further advantageous aspects of the present invention are set out in the dependent claims.

The invention will become more apparent from the following description to be considered with reference to the attached single sheet of drawing, wherein

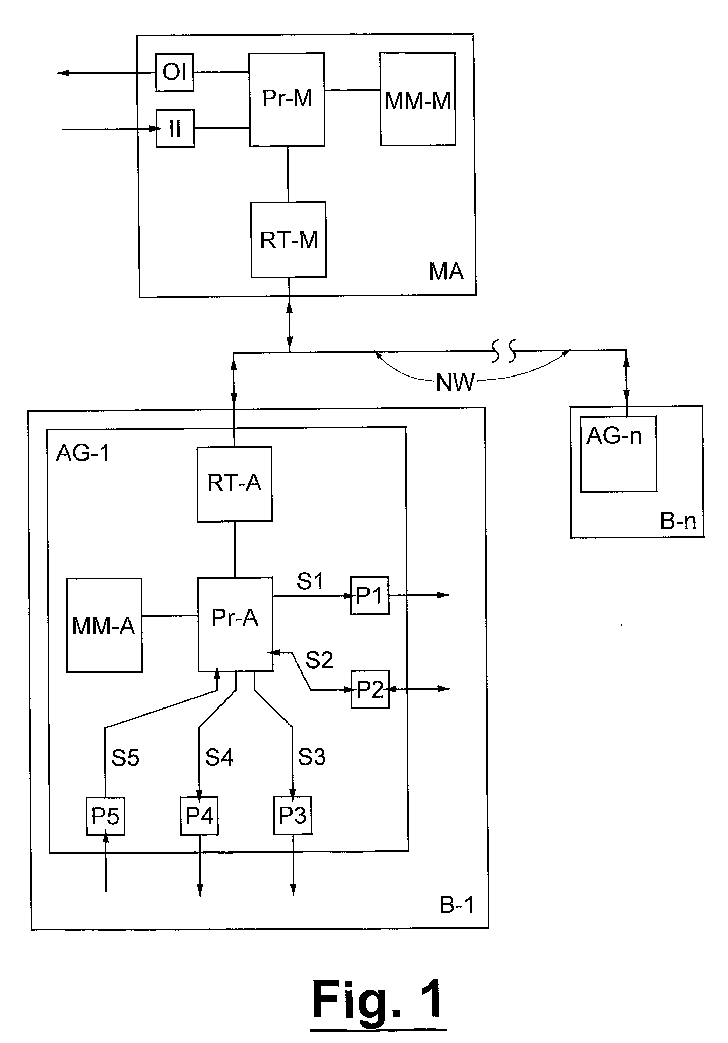

Fig. 1 shows a much simplified block diagram of a telecommunication equipment wherein its management system is particularly evidenced with respect to the rest of the equipment.

In the following description, reference is always made to "software", as opposed to "hardware", irrespectively whether it is "application software" or "system software", sometimes called "firmware".

As already explained, the management of a telecommunication equipment is made through a software program; in order to enable the software program to easily process management signals of the telecommunication equipment (in Fig. 1, only five management signals of the first board B-1 of the equipment are shown referenced as S1,S2,S3,S4,S5), according to the present invention, the following steps has to be performed :
a) associating said management signals to physical data,
b) associating each piece of data to a field of a register,
c) associating register property values to each register in relation particularly to the associated management signals,
d) associating field property values to each field in relation particularly to the associated management signal,
e) generating a description of the associations carried out in a format that can be read by software means.

Typically, such a description consists of one or more computer files; these can be not only easily read but also easily transferred.

Alternatively, such a description may consist of a database; in this case, access to the information contained in the database my be done by the software program through a database management system (DBMS).

Once such a description has been generated, it can be provided to a management software program when the program is executed by a processor, e.g. Pr-A or Pr-M, of the telecommunication equipment; a typical way to do this consists in storing such a description on memory means, e.g. MM-A or MM-M, connected to the processor and providing the management software program with a software code portion for reading the description. If the program is executed under the control of a programming language interpreter, the management software program may read the description through the interpreter.

In this way, for a wide range of equipments, only the management algorithms need to be coded in the management software program; most of the things which are specific of the equipment to be monitored can be specified in the description provided to the program.

According to the present invention, a further step may be provided consisting in associating at least one action to a field or to a register, wherein the or each action consists of a computation to be carried out on the field or register; if this further association is done, a corresponding description is to be generated for the software program.

This means that the management software program will be provided with a number of simple algorithms to be used to process management signals; these algorithms are easy to be corrected and/or updated without intervening on the program.

The computation to be carried out on the field or register as an action may consist of at least one assignment operation that assigns to the field or register one of the following :
- a constant value ,
- the value of another field or register ,
- the result of an arithmetic operation on constants and/or fields or registers.

This kind of computation is sufficiently simple to be easily handled as input data for the management software program and sufficiently powerful to define equipment-specific algorithms.

A further improvement is achieved by providing that assignment operation may be subordinated to a definable condition of one or more fields or registers. This increase the flexibility of the algorithms.

In this way, for a wide range of equipments, only the basic management algorithms need to be coded in the management software program; everything else which is specific of the equipment to be monitored can be specified in the description provided to the program.

For telecommunication equipments the register properties can be :
**label:** the name of the register,
**set/get:** indicates whether the data contained in the register are to be transferred from Agent to Manager or from Manager to Agent,
**acquisition time:** indicates the period of acquisition of the data contained in the register from the Agent by the Manager ,
**update time:** indicates the period of update of the data contained in the register from the Peripherals by the Agent ,
**channel dependence:** indicates how many instances of the register are necessary - this is useful when an equipment consists of a number of identical modules that perform the same functions on different physical data, e.g. a multiple-channel radio relay link,
**non-volatility:** indicates whether the data contained in the register are stored permanently (i.e. after switching power off) ,
**group non-volatility:** indicates a group of registers to be stored permanently as a single piece of information .

An optimal implementation is achieved by using registers having all the same word-length, e.g. 32, 48 or 64 bits.

For telecommunication equipments the field properties can be :
**label:** the name of the field ,
**type:** the type of data contained in the field, e.g. an alarm ,
**container register:** the register's name containing the field,
**position:** the position of the field within the container register as a number of displacement bits from bit 0 of the register,
**length:** the length of the field as a number of bits ,
**initial value:** the value of the field when the software program starts execution .

In order to increase the flexibility of the method, it is advantageous that all the types of the fields be defined and provided to the software program, i.e. that no pre-defined types be coded in the software program.

A complete set of types comprises :
**ALARM**: field of one bit which identifies the status of an alarm,
**STATUS:** field of one or more bits which identifies a well-defined status of the equipment (permanent or temporary),
**MEASURE:** field generally of more bits which identifies the result of an active measure; if the measure is not active, it contains the result of the last measurement carried out,
**VALUE:** field of one or more bits which identifies permanent configuration values of the equipment,
**CONTROL:** field of one or more bits which identifies a request of manual temporary forcing of values or specific functionalities of the equipment,
**ECHO:** field generally of one bit which identifies the presence of a specific manual forcing in progress,
**IMPULSIVE:** field generally of one bit which identifies a synchronisation event to activate, upon request, automatic functionalities,
**CRITERION:** field generally of one bit which identifies an event used by the state algorithms as evolutive key,
**COMMAND:** field generally of one bit which identifies the status of a peripheral, generally used as monitoring.

In the case of defined types, each time the software program has to carry out any operation on a piece of data associated to management signals, it has to take into account its field properties, including its type and length.

The management of an equipment may be quite difficult for an operator because it requires that he knows the architecture and the operation of both the equipment and the management system.

Therefore, it is useful to define some high-level management information in such a way as to give the possibility of a high-level management of the equipment both (preferably) in terms of monitoring and in terms of controlling.

Once the useful management information has been defined, it is necessary to associate this information to logical data.

In this case, the method of the present invention considers not only physical data but also logical data; therefore, each piece of logical data shall be associated to a field of a register, that can be called "logical register", and the generated description shall take into account both kinds of data and registers.

The same kind of consideration made for the physical data applies to logical data.

For logical data, actions represents a very important aspect as, in general, logical data are monitoring information relating to a plurality of physical data or logical data are controlling information for a plurality of physical data.

In case actions are associated to fields of logical registers, i.e. to logical data, a corresponding description shall be generated and provided to the software program.

In addition to what set out above, the description generated according to the present invention may include information relating to : how to display physical and logical data, the version of the description, the equipment type, the hardware code, the software product, the software version, the communication protocol version, the slot number, the microcontroller number, the number of channels.

As the description to be generated by the method according to the present invention has to be easily readable by software means and has to be interpreted by a software program, a uniform syntax shall preferably be used; in this way a sort of description language is defined.

According to another aspect, the present invention also relates to a method for processing management signals of a telecommunication equipment through a software program, wherein the software program reads the description of management signals of the telecommunication equipment generated according to the method previously described, and wherein the software program carries out the processing required by acting on the physical data associated taking properties into account.

The description of the management signals of the telecommunication equipment may be read entirely or partially; in fact, while it is advantageous to provide a complete description of the equipment, if the software program has the task to manage only a part of the equipment, e.g. a board, it is not necessary to read the information relating to management signals of other boards.

If high-level management information has been defined, the software program may read entirely or partially also the description of high-level management information generated according to the method previously described; this is the case of the Manager management software program.

If actions have been defined associated to fields of physical and/or logical registers and if these actions have been read by the software program, the software program carries out the processing required by acting on the physical data associated to the management signals taking also actions into account.

The processing relating to actions is data-driven, i.e. whenever a field or register changes its value, all the actions having such a field or register as an operand will be carried out.

Although the processing of management signals is primarily carried out by the management software program acting on the physical data, if high-level management information has been defined and logical data have been associated the user of the management software program may (if he wants to) act only on logical data; the mapping between logical data and physical data may be done through appropriate actions.

According to still another aspect, the present invention relates to a software program product comprising program code adapted to carry out the management method described above when said program code is executed by a processor.

## Claims

1. Method for enabling a software program to process management signals (S1,S2,S3,S4,S5) of a telecommunication equipment, comprising the steps of:
a) associating said management signals to physical data,
b) associating each piece of data to a field of a register,
c) associating register property values to each register in relation particularly to the associated management signals,
d) associating field property values to each field in relation particularly to the associated management signal, and
e) generating a description of the associations carried out in a format that can be read by software means.

2. Method according to claim 1, comprising the further step of:
f) providing said description to the software program when executed by a processor of the telecommunication equipment.

3. Method according to claims 1 or 2, comprising, between step a) and step b), the further step of associating high-level management information to logical data.

4. Method according to claims 1 or 2 or 3, comprising further the step of associating at least one action to a field or to a register, wherein the or each action consists of a computation to be carried out on the field or register, and wherein step e) takes into account also the or each action.

5. Method according to any of the preceding claims, wherein the computation to be carried out on the field or register as an action consists of at least one assignment operation that assigns to the field or register one of the following :
- a constant value ,
- the value of another field or register ,
- the result of an arithmetic operation on constants and/or fields or registers .

6. Method according to claim 5, wherein an assignment operation is subordinated to a definable condition of one or more fields or registers.

7. Method according to any of the preceding claims, wherein said description consists of one or more computer files.

8. Method for processing management signals (S1, S2, S3, S4, S5) of a telecommunication equipment through a software program, wherein the software program reads entirely or partially the description of management signals of the telecommunication equipment generated according to the method according to any of the preceding claims, and wherein the software program carries out the processing required by acting on the physical data associated taking properties into account.

9. Method according to claim 8, wherein the software program reads entirely or partially also the description of high-level management information generated according to the method according to any claims 3 to 7.

10. Method according to claims 8 or 9, wherein the software program carries out the processing required by acting on the physical data associated taking also actions into account.

11. Software program product comprising program code adapted to carry out the method of any of claims 8 to 10 when said program code is executed by a processor.
